# EUROPEAN PATENT SPECIFICATION

(11) **EP 3 573 829 B1**
(45) Date of publication and mention of the grant of the patent: **20.11.2024**
(21) Application number: 18701358.6
(22) Date of filing: 26.01.2018
(51) Int. Cl.: B32B 27/32, B32B 1/08, B32B 25/14, B32B 27/18, B32B 27/08, B32B 7/12

(54) **MULTI-LAYER FILM**
MEHRSCHICHTIGE FOLIE
FILM MULTICOUCHE

(30) Priority: 26.01.2017 EP 17153240
(43) Date of publication of application: 04.12.2019
(73) Proprietor: SABIC Global Technologies B.V., 4612 PX Bergen op Zoom (NL)
(72) Inventor: SCALA, Attilio, 6160 GA Geleen (NL); BACCARO, Lucio, 6160 GA Geleen (NL)
(74) Representative: Sabic Intellectual Property Group
(86) International application number: PCT/EP2018/052014
(87) International publication number: WO 2018/138294

(56) References cited:
- WO-A1-00/37240
- WO-A1-2016/079367
- US-A1- 2010 266 826
- US-A1- 2012 028 017

## Description

The invention relates to a multi-layer film, especially for protection film applications, an article comprising said film and the use of said film.

Films for protection film applications may be used in packaging, especially to protect articles.

Films for protection film applications are thereby known for example from US8685523, which describes a film with a polypropylene substrate layer and an adhesive layer. Smilar packaging films are known from WO00/37240, US2010/266826 and WO2016/079367.

However, despite previous research in the field, there is always a continuous need for films with good optics and/or a good tear resistance and/or good rigidity and/or low stretching during the peeling off.

Protection films are typically used to provide temporary protection to a surface of an object such as during shipment and storage of an object before being made available to an end-user. The end-user typically needs to be able to remove the protection film from the object to access the surface of the object onto which the protection film has been applied. Commonly known examples of surfaces where such protection films are applied to during shipment and storage are display surfaces of electronic devices, such as smart phones and tablets, in particular touch-screen display surfaces. The protection film is applied to avoid any contamination, scratching, corrosion or other damage of the display surface to occur at any point between the manufacturing of the object and the initiation of the use by the end-user. The end-user needs to be able to easily remove the film from the protected surface without the film tearing, excessively stretching or leaving any remaining material of the surface. It is further desirable that the protection film is sufficiently transparent and clear to allow a view onto the protected surface even in the condition where the film is applied. It is further also desirable that the film itself has a certain resistance to scratching and puncturing as to ensure adequate protection of the underlying surface.

Therefore, it is the object of the invention to provide multi-layer films with with good optics and/or a good tear resistance and/or good rigidity and/or low stretching during the peeling off. In particular, it is an object of the invention to provide multi-layer films that demonstrate a balance of these properties, i.e. good optics, tear resistance, rigidity and low stretching during peeling off.

This object is achieved by a multi-layer film comprising at least three layers, with two outer layers and one core layer, wherein the two outer layers comprise between > 50 wt. % and 85 wt. % of a low density polyethylene having a density between 0.915 g/cm³ and 0.935 g/cm³ and between 15 wt.% and < 50 wt. % of a polypropylene with a density between 0.890 and 0.920 g//cm³ based on the total weight of polymers of the layer, wherein further the core layer comprises an ethylene copolymer comprising 1-octene and having a density between 0.910 g/cm³ and 0.925 g/cm³.

With outer layers are meant the layers that are located on the outside of the film. The outer layers may thus preferably adjacent to only one other layer of the multi-layer film according to the invention on only one of their sides. As compared to other layers in the multi-layer film of the invention, the outer layers have a substantially larger portion of the layer that faces the outside. With core layer is meant a layer that is located between at least two outer layers, preferably in the middle of the multi-layer arrangement of the multi-layer film according to the invention, especially when the multi-layer film is film with at least three or exactly three layers.

With adjacent layer, as used herein, is meant a layer that is in direct contact with the layer to which it is described as adjacent. In direct contact may thereby mean that preferably no further layer is arranged between two layers which are in direct contact. Each adjacent layer to an outer layer, would therefore be in direct contact with that outer layers. A layer adjacent to at least one outer layer may thereby be for example a core layer.

The three layers of a multi-layer film according to the invention may preferably be adjacent to each other. This may mean that the core layer is in direct contact with both of the outer layers.

An ethylene copolymer may be a copolymer of ethylene and at least one α-olefin, preferably 1-octene.

In the context of the present invention, the ethylene copolymer that is comprised in the core layer may also be referred to as a linear low-density polyethylene or LLDPE.

In a multi-layer film according to the invention, the core layer may comprise for example between 55 wt. % and 100 wt. %, preferably between > 60 wt. % and 100 wt. %, further preferred between> 70 wt. % and 100 wt. %, further preferred between> 80 wt. % and 100 wt. %, further preferred between> 90 wt. % and 100 wt. %, further preferred between> 95 wt. % and 100 wt. %, further preferred between> 99 wt. % and 100 wt. % of the ethylene copolymer comprising 1-octene based on the total weight of polymers of the layer. This may further contribute to good optics and/or a good tear resistance and/or good rigidity and/or low stretching during the peeling off.

In a multi-layer film according to the invention, the outer layers may comprise for example between > 60 wt. % and 80 wt. %, preferably between > 65 wt. % and < 80 wt. %, further preferred between 65 wt. % and 75 wt. %, of the low density polyethylene and between 20 wt. % and < 40 wt. %, preferably between > 20 wt. % and < 35 wt. %, further preferred preferably between 25 wt. % and 35 wt. %, of the polypropylene based on the total weight of polymers of the layer. This may further contribute to good optics and/or a good tear resistance and/or good rigidity and/or low stretching during the peeling off.

In a multi-layer film according to the invention, the multi-layer film and/or each of the three layers according to the invention may comprise only polyolefins as polymers and/or the multi-layer film may preferably comprise no polybutene-1 and/or the multi-layer film may preferably comprise no polypropylene and/or the multi-layer film may preferably comprise no ethylene and vinyl acetate copolymer and/or no ethylene and vinyl alcohol copolymer and/or no copolymer of ethylene and an acrylate or methacrylate, especially for example acrylic acid or methacrylic acid, and/or the multi-layer film may preferably be a multi-layer film for protection film applications.

In a multi-layer film according to the invention, the density of the low density polyethylene of the outer layers may be between > 0.915 and < 0.932 g/cm³, preferably between > 0.920 and < 0.930 g/cm³ and/or the melt flow rate of the low density polyethylene of the outer layers may be between 0.2 and 3 g/10 min, preferably between 1 and 2.5 g/10 min.

In a multi-layer film according to the invention, the density of the polypropylene of the outer layers may be between > 0.895 and < 0.915 g/cm³, preferably between > 0.900 and < 0.910 g/cm³ and/or the melt flow rate of the polypropylene of the outer layers may be between 0.2 and 15 g/10 min, preferably between 5 and 12 g/10 min.

In a multi-layer film according to the invention, the density of the ethylene copolymer of core layer may be between 0.910 and 0.922 g/cm³, preferably between > 0.910 and < 0.920 g/cm³ and/or the melt flow rate of the ethylene copolymer of the core layer may be between 0.2 and 6 g/10 min, preferably between 0.5 and 4 g/10 min.

In a multi-layer film according to the invention, the melt flow rate of the low density polyethylene of the first outer layer and/or of the core layer may be lower than the melt flow rate of the low density polyethylene of the second outer layer.

For the purpose of the invention, the density may be determined using ISO1873 (A) or ASTM-D 1505 or ASTM D 792. For example, the density of the polypropylene may be determined in accordance with ASTM D792. For example, the density of the low density polyethylene may be determined in accordance with ASTM D1505. For example, the density of the ethylene copolymer comprising 1-octene may be determined in accordance with ASTM D150δ.

For the purpose of the invention, the melt flow rate may be determined herein using ISO1133:2011 (190°C/2.16kg) or ASTM D1238 (190°C/2.16kg). In the context of the present invention, the melt flow rate is to be understood to be the melt mass flow rate. Preferably, the melt mass flow rate of polyethylene materials is determined in accordance with ISO 1133-1 (2011) at a temperature of 190°C and a load of 2.16 kg. Preferably, the melt mass flow rate of polypropylene materials is determined in accordance with ISO 1133-1 (2011) at a temperature of 230°C and a load of 5 kg.

In the multi-layer film of the invention, the core layer and/or the outer layers may for example comprise polyethylene, especially for example linear low density polyethylene and/or high density polyethylene and/or low density polyethylene and/or an ethylene copolymer and/or polypropylene and/or blends of two or more of thereof.

Besides polymers, each layer may also comprise other compounds. For example, each layer may especially further comprise additives as other compounds, especially for example additives as described herein.

A multi-layer film according to the invention may comprise at least one, preferably exactly one, core layer.

In a particular embodiment, the present invention relates to a multi-layer film comprising exactly three layers, wherein the film comprises two outer layers and one core layer, the core layer comprising a top surface and a bottom surface, wherein a first one of the outer layers is positioned onto the top surface of the core layer, and a second one of the outer layers is positioned onto the bottom surface of the core layer. Preferably, the outer layers are positioned onto the surfaces of the core layer in such way as to adhere to the core layer, thus forming a three-layer film wherein all three layers are adhering to each other.

It is preferred that the composition of the first one of the outer layers is the same as the composition of the second one of the outer layers.

In a preferred embodiment of the invention, the composition of the outer layers comprises between > 50 wt% and 85 wt% of a low density polyethylene having a density between 0.915 g/cm³ and 0.30 g/cm³, as determined in accordance with ASTM D1505-10.

A multi-layer film according to the invention may comprise exactly five layers. A multi-layer film according to the invention may comprise exactly three layers.

The production processes of LDPE, HDPE and LLDPE are summarized in Handbook of Polyethylene by Andrew Peacock (2000; Dekker; ISBN 0824795466) at pages 43-66. The catalysts can be divided in three different subclasses including Ziegler Natta catalysts, Phillips catalysts and single site catalysts. The latter class is a family of different classes of compounds, metallocene catalysts being one of them. As elucidated at pages 53-54 of said Handbook a Ziegler-Natta catalyzed polymer is obtained via the interaction of an organometallic compound or hydride of a Group I-III metal with a derivative of a Group IV-VIII transition metal. An example of a (modified) Ziegler-Natta catalyst is a catalyst based on titanium tetra chloride and the organometallic compound triethylaluminium. A difference between metallocene catalysts and Ziegler Natta catalysts is the distribution of active sites. Ziegler Natta catalysts are heterogeneous and have many active sites. Consequently, polymers produced with these different catalysts will be different regarding for example the molecular weight distribution and the comonomer distribution.

The low density polyethylene (LDPE) applied in the present film may be produced by a free radical polymerization process and/or without any catalyst and/or using an autoclave high pressure process or a tubular reactor process. Preferably, LDPE is produced by free-radical polymerisation in a tubular reactor process at high pressures, such as pressures of 150-350 MPa. LDPE is known to the skilled person to be different from linear low-density polyethylene (LLDPE), which commonly is produced in catalysed polymerisation reactions, for example at pressures of < 10 MPa. Typical commercial production of LLDPE may be done using a Ziegler-Natta type catalyst, or using a single-site type catalyst, such as a metallocene-type catalyst. Each of these processes delivers very characteristic and unique polymers, which is well understood and recognised in the art. Examples of LLDPE and LDPE materials and their production processes are described in for example Polyethylene, Ullmann's Encyclopedia of Industrial Chemistry, DOI: 10.1002/14356007.a21_487.pub3.

An ethylene copolymer according to the present invention may thereby especially be linear low density polyethylene (LLDPE) and/or a polyolefin plastomer and/or a polyolefin elastomer.

With linear low density polyethylene (LLDPE) as used herein is meant a low density polyethylene copolymer ethylene-alpha olefin copolymer) comprising ethylene and a C3- C10 alpha-olefin co-monomer. Suitable alpha-olefin co-monomers include 1-butene, 1-hexene, 4-methyl-1-pentene and 1-octene.

Preferably, the alpha-olefin co monomer may be present for example in an amount of about 1 to about 25, preferably 5 to about 20 percent by weight of the ethylene-alpha olefin copolymer, preferably of 5 to about 20 percent by weight of the ethylene-alpha olefin copolymer, more preferably an amount of from about 7 to about 15 percent by weight of the ethylene-alpha olefin copolymer. LLDPE, as used herein, may be produced for example using metallocene and/or Ziegler-Natta catalysts. For example, the LLDPE may be produced using a metallocene catalyst.

The technologies suitable for the LLDPE manufacture include but are not limited to gas- phase fluidized-bed polymerization, polymerization in solution, and slurry polymerization.

According to a preferred embodiment of the present invention the LLDPE has been obtained by gas phase polymerization in the presence of a Ziegler-Natta catalyst. According to another preferred embodiment, the LLDPE may be obtained by gas phase or slurry polymerization in the presence of a metallocene catalyst. In another embodiment, the LLDPE may be obtained by a solution polymerisation process in the presence of a metallocene catalyst.

The components of each layer according to the invention may preferably for example add up to 100 wt. % of each layer or to 100 wt. % of the polymer content of each layer.

The thickness of multi-layer film of the invention may range for example from 5 to 600 µm, for example from 50 to 500 µm, especially for example between > 75 to 400 µm. Not all layers in the multi-layer film of the invention need to have the same thickness. For example, one or more layers in the multi-layer film may be thicker than the other layers, especially for example to increase the stability of the production process.

In a multi-layer film according to the invention, the thickness of each outer layer may represent between 15 % and 35 % of the total film thickness, preferably between < 20 % and < 30 % of the total film thickness, further preferred 25 % of the total film thickness and/or the thickness of the core layer may represent between 30 % and 70 % of the total film thickness, preferably between > 40 % and < 60 % of the total film thickness, further preferred 50 % of the total film thickness.

Moreover, each layer of the multi-layer film of the invention may comprise an amount of additives of 0 to 25 wt. %, especially for example 1 to 10 wt. % especially for example 0 to 8 wt. % or 0.001 to 1 wt. % based on the total weight of the layer. The rest of each layer may thereby be made up of polymers.

Additives may thereby especially for example be UV stabilizers, antistatic agents, slip/anti-block agents, fillers, antioxidants, pigments, fluor elastomers used as polymer processing aids and/or mixtures of two or more thereof. Especially for example an erucamide and/or an oleamide and/or silica and/or talc.

A multi-layer film according to the invention may comprise at least three layers or exactly three layers, with two outer layers and one core layer, wherein the two outer layers comprise between > 60 wt. % and 80 wt. % of a low density polyethylene having a density between > 0.920 g/cm³ and < 0.930 g/cm³ and between 20 wt.% and < 40 wt. % of a polypropylene with a density between > 0.895 and < 0.915 g//cm³ based on the total weight of polymers of the layer, wherein further the core layer comprises 100 wt. % of an ethylene copolymer comprising 1-octene and having a density between > 0.915 g/cm³ and 0.925 g/cm³, wherein the multi-layer film and/or each of the three layers comprises only polyolefins as polymers and/or wherein further the three layers are adjacent to each other.

In a particular embodiment, the invention relates to a multi-layer film comprising at least three layers, preferably exactly three layers, with two outer layers and one core layer, wherein the two outer layers comprise between > 50 wt. % and 85 wt. % of a low density polyethylene having a density between 0.915 g/cm³ and 0.935 g/cm³ and between 15 wt.% and < 50 wt. % of a polypropylene with a density between 0.890 and 0.920 g/cm³ based on the total weight of polymers of the layer, wherein further the core layer comprises an ethylene copolymer comprising 1-octene and having a density between 0.910 g/cm³ and 0.925 g/cm³, wherein
- the low density polyethylene is a low density polyethylene homopolymer having a density of between 0.915 and 0.930 g/cm³ , preferably of between 0.920 and 0.930 g/cm³ as determined in accordance with ASTM D1505, and a melt mass flow rate as determined in accordance with ISO 1133-1 (2011) at a temperature of 190°C and a load of 2.16 kg of between 1 and 2.5 g/10 min, preferably between 1.0 and 2.5 g/10 min, more preferably between 1.5 and 2.0 g/10 min;
- the polypropylene is a polypropylene copolymer having a density of between 0.890 and 0.920 g/cm³, preferably between 0.900 and 0.910 g/cm³, as determined in accordance with ASTM D792, and a melt mass flow rate as determined in accordance with ISO 1133-1 (2011) at a temperature of 230°C and a load of 5 kg of between 0.2 and 10 g/15 min, preferably between 5.0 and 10.0 g/10 min; and
- the ethylene copolymer comprising 1-octene is a linear low-density polyethylene having a density of between 0.910 and 0.925 g/cm³, more preferably between 0.915 and 0.920 g/cm³, as determined in accordance with ASTM D1505, and a melt mass-flow rate as determined in accordance with ISO 1133-1 (2011) at a temperature of 190°C and a load of 2.16 kg of between 0.2 and 6 g/10 min, preferably between 1.0 and 4.0 g/10 min.

In a further particular embodiment, the invention relates to a multi-layer film comprising at least three layers, preferably exactly three layers, with two outer layers and one core layer, wherein the two outer layers comprise between > 50 wt. % and 85 wt. % of a low density polyethylene having a density between 0.915 g/cm³ and 0.935 g/cm³ and between 15 wt.% and < 50 wt. % of a polypropylene with a density between 0.890 and 0.920 g/cm³ based on the total weight of polymers of the layer, wherein further the core layer comprises an ethylene copolymer comprising 1-octene and having a density between 0.910 g/cm³ and 0.925 g/cm³, wherein
- the low density polyethylene is a low density polyethylene homopolymer having a density of between 0.915 and 0.930 g/cm³ , preferably of between 0.920 and 0.930 g/cm³ as determined in accordance with ASTM D1505, and a melt mass flow rate as determined in accordance with ISO 1133-1 (2011) at a temperature of 190°C and a load of 2.16 kg of between 1 and 2.5 g/10 min, preferably between 1.0 and 2.5 g/10 min, more preferably between 1.5 and 2.0 g/10 min;
- the polypropylene is a polypropylene copolymer having a density of between 0.890 and 0.920 g/cm³, preferably between 0.900 and 0.910 g/cm³, as determined in accordance with ASTM D792, and a melt mass flow rate as determined in accordance with ISO 1133-1 (2011) at a temperature of 230°C and a load of 5 kg of between 0.2 and 10 g/15 min, preferably between 5.0 and 10.0 g/10 min; and
- the ethylene copolymer comprising 1-octene is a linear low-density polyethylene having a density of between 0.910 and 0.925 g/cm³, more preferably between 0.915 and 0.920 g/cm³, as determined in accordance with ASTM D1505, and a melt mass-flow rate as determined in accordance with ISO 1133-1 (2011) at a temperature of 190°C and a load of 2.16 kg of between 0.2 and 6 g/10 min, preferably between 1.0 and 4.0 g/10 min
wherein the film has a thickness of 50 to 500 µm, preferably from 75 to 400 µm, an wherein preferably the thickness of the core layer is between 40 and 60% of the thickness of the total film.

The multi-layer films of the present invention may be prepared by any method known in the art. Multi-layer structures may be prepared for example by a blown film co-extrusion process, for example as disclosed in "Film Extrusion Manual", (TAPPI PRESS, 2005, ISBN 1 -59510-075-X, Editor Butler, pages 413-435).

For example, in the process of coextrusion, the various resins may be first melted in separate extruders and then brought together in a feed block. The feed block is a series of flow channels which bring the layers together into a uniform stream. From this feed block, this multi-layer material then flows through an adapter and out a film die. The blown film die may be an annular die. The die diameter may be a few centimeters to more than three meters across. The molten plastic is pulled upwards from the die by a pair of nip rolls high above the die (from for example 4 meters to more than 20 meters). Changing the speed of these nip rollers will change the gauge (wall thickness) of the film. Around the die an air-ring may be provided. The air exiting the air-ring cools the film as it travels upwards. In the center of the die there may be an air outlet from which compressed air can be forced into the center of the extruded circular profile, creating a bubble. This expands the extruded circular cross section by some ratio (a multiple of the die diameter). This ratio, called the "blow-up ratio" can be just a few percent to for example more than 300 percent of the original diameter. The nip rolls flatten the bubble into a double layer of film whose width (called the "layflat") is equal to ½ of the circumference of the bubble. This film may then be spooled or printed on, cut into shapes, and heat sealed into bags or other items.

The present invention also concerns an article comprising a multi-layer film according to the invention.

The invention further relates in an embodiment to an article comprising a multi-layer film according to the invention wherein the multi-layer film is adhered to a surface in such way that the film can be removed from the surface without leaving remainders of the film material on the surface.

Such article may for example be a device comprising a pane, preferably a transparent pane, for example a glass pane, that is positioned such that at least one surface of the pane is arranged to face the outer side of the device, for example a display screen, wherein the multi-layer film is adhered to the pane so as to cover the surface of the pane that faces the outer side of the device. The pane may be flat, or alternatively the pane may be curved.

Such article may be for example a glass sheet, an electronic display, a television, a tablet computer, a laptop computer, a smartphone, or an automotive dashboard information screen.

Alternatively, such article may also be an automotive body panel

Furthermore, the present invention also concerns the use of the multi-layer film according to the invention for protection film applications, especially for protection films in high temperature adhesive coating processes, especially for example carried out using a temperature > 75 'C, preferable > 90 °C, further preferred ≥ 100 °C.

In a certain embodiment, the invention relates to a process for applying the multi-layer film to a surface by the steps of:
a) providing the film;
b) providing an article comprising a surface to which the film is to be applied;
c) bringing the film to a temperature of > 75°C, preferably > 90°C, further preferably > 100°C;
d) bringing one of the surface of the heated film into contact with the surface to which the film is to be applied, preferably by applying a pressure onto the film to obtain a surface to which the film is contacted; and
e) cooling the film to a temperature of < 50°C, to obtain an article comprising a surface to which the film is applied.

In particular, the invention relates to a process for applying the multi-layer film to a surface by the steps of:
a) providing the film;
b) providing an article comprising a surface to which the film is to be applied;
c) bringing the film to a temperature of > 75°C, preferably > 90°C, further preferably > 100°C;
d) bringing one of the surface of the heated film into contact with the surface to which the film is to be applied, preferably by applying a pressure onto the film to obtain a surface to which the film is contacted; and
e) cooling the film to a temperature of < 50°C, to obtain an article comprising a surface to which the film is applied;
wherein the multi-layer film comprises at least three layers, preferably exactly three layers, with two outer layers and one core layer, wherein the two outer layers comprise between > 50 wt. % and 85 wt. % of a low density polyethylene having a density between 0.915 g/cm³ and 0.935 g/cm³ and between 15 wt.% and < 50 wt. % of a polypropylene with a density between 0.890 and 0.920 g/cm³ based on the total weight of polymers of the layer, wherein further the core layer comprises an ethylene copolymer comprising 1-octene and having a density between 0.910 g/cm³ and 0.925 g/cm³.

More preferably, the invention relates to a process for applying the multi-layer film to a surface by the steps of:
a) providing the film;
b) providing an article comprising a surface to which the film is to be applied;
c) bringing the film to a temperature of > 75°C, preferably > 90°C, further preferably > 100°C;
d) bringing one of the surface of the heated film into contact with the surface to which the film is to be applied, preferably by applying a pressure onto the film to obtain a surface to which the film is contacted; and
e) cooling the film to a temperature of < 50°C, to obtain an article comprising a surface to which the film is applied;
wherein the multi-layer film comprises exactly three layers, with two outer layers and one core layer, wherein the two outer layers comprise between > 50 wt. % and 85 wt. % of a low density polyethylene having a density between 0.915 g/cm³ and 0.935 g/cm³and between 15 wt.% and < 50 wt. % of a polypropylene with a density between 0.890 and 0.920 g/cm³ based on the total weight of polymers of the layer, wherein further the core layer comprises an ethylene copolymer comprising 1-octene and having a density between 0.910 g/cm³ and 0.925 g/cm³.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

## Claims

1. Multi-layer film comprising at least three layers, with two outer layers and one core layer, wherein the two outer layers comprise between > 50 wt. % and 85 wt. % of a low density polyethylene having a density between 0.915 g/cm³ and 0.935 g/cm³ and between 15 wt.% and < 50 wt. % of a polypropylene with a density between 0.890 and 0.920 g/cm³ based on the total weight of polymers of the layer, wherein further the core layer comprises an ethylene copolymer comprising 1-octene and having a density between 0.910 g/cm³ and 0.925 g/cm³.

2. Multi-layer film according to claim 1, wherein the outer layers comprise between > 60 wt. % and 80 wt. %, preferably between > 65 wt. % and < 80 wt. %, further preferred between 65 wt. % and 75 wt. %, of the low density polyethylene and between 20 wt. % and < 40 wt. %, preferably between > 20 wt. % and < 35 wt. %, further preferred preferably between 25 wt. % and 35 wt. %, of the polypropylene based on the total weight of polymers of the layer.

3. Multi-layer film according to claim 1 or claim 2, wherein the multi-layer film and/or each of the three layers according to the invention may comprise only polyolefins as polymers and/or the multi-layer film may preferably comprise no polypropylene and/or the multi-layer film may preferably comprise no ethylene and vinyl acetate copolymer and/or no ethylene and vinyl alcohol copolymer and/or no copolymer of ethylene and an acrylate or methacrylate, especially for example acrylic acid or methacrylic acid, and/or the multi-layer film may preferably be a multi-layer film for protection film applications.

4. Multi-layer film according to any one of claims 1-3, wherein the density of the low density polyethylene of the outer layers is between > 0.915 and < 0.932 g/cm³, preferably between > 0.920 and < 0.930 g/cm³ and/or the melt flow rate of the low density polyethylene of the outer layers may be between 0.2 and 3 g/10 min, preferably between 1 and 2.5 g/10 min.

5. Multi-layer film according to any one of claims 1-4, wherein the density of the polypropylene of the outer layers is between > 0.895 and < 0.915 g/cm³, preferably between > 0.900 and < 0.910 g/cm³ and/or the melt flow rate of the polypropylene of the outer layers may be between 0.2 and 15 g/10 min, preferably between 5 and 12 g/10 min.

6. Multi-layer film according to any one of claims 1-5, wherein the density of the ethylene copolymer of core layer is between 0.910 and 0.922 g/cm³, preferably between > 0.910 and < 0.920 g/cm³ and/or the melt flow rate of the ethylene copolymer of the core layer may be between 0.2 and 6 g/10 min, preferably between 0.5 and 4 g/10 min.

7. Multi-layer film according to any one of claims 1-6, wherein the core layer comprises between 55 wt. % and 100 wt. %, preferably between > 60 wt. % and 100 wt. %, further preferred between> 70 wt. % and 100 wt. %, further preferred between> 80 wt. % and 100 wt. %, further preferred between> 90 wt. % and 100 wt. %, further preferred between> 95 wt. % and 100 wt. %, further preferred between> 99 wt. % and 100 wt. % of the ethylene copolymer comprising 1-octene based on the total weight of polymers of the layer.

8. Multi-layer film according to any one of the claims 1 to 7, the thickness of each outer layer represents between 15 % and 35 % of the total film thickness, preferably between < 20 % and < 30 % of the total film thickness, further preferred 25 % of the total film thickness and/or the thickness of the core layer represents between 30 % and 70 % of the total film thickness, preferably between > 40 % and < 60 % of the total film thickness, further preferred 50 % of the total film thickness.

9. Multi-layer film according to any one of the claims 1 to 8, wherein the low density polyethylene (LDPE) is produced by a free radical polymerization process and/or without any catalyst and/or using an autoclave high pressure process or a tubular reactor process.

10. Article comprising a multi-layer film according to any one of claims 1-9.

11. Article according to claim 10 wherein the multi-layer film is adhered to a surface in such way that the film can be removed from the surface without leaving remainders of the film material on the surface.

12. Article according to claims 10-11 wherein the article is a device comprising a pane, preferably a transparent pane, for example a glass pane, that is positioned such that at least one surface of the pane is arranged to face the outer side of the device, for example a display screen, wherein the multi-layer film is adhered to the pane so as to cover the surface of the pane that faces the outer side of the device.

13. Article according to claims 10-12, wherein the article is a glass sheet, an electronic display, a television, a tablet computer, a laptop computer, a smartphone, an automotive dashboard information screen or an automotive body panel.

14. Use of the multi-layer film according to any one of claims 1-9 for protection film applications, especially for protection films in high temperature adhesive coating processes, especially for example carried out using a temperature > 75 °C, preferable > 90 °C, further preferred ≥ 100 °C.

15. Process for applying a multi-layer film according to any of claims 1-9 to a surface by the steps of:
a) providing the film;
b) providing an article comprising a surface to which the film is to be applied;
c) bringing the film to a temperature of > 75°C, preferably > 90°C, further preferably > 100°C;
d) bringing one of the surface of the heated film into contact with the surface to which the film is to be applied, preferably by applying a pressure onto the film to obtain a surface to which the film is contacted; and
e) cooling the film to a temperature of < 50°C, to obtain an article comprising a surface to which the film is applied.

## Patentansprüche

1. Mehrschichtige Folie aus mindestens drei Schichten, mit zwei äußeren Schichten und einer Kernschicht, wobei die zwei äußeren Schichten zwischen > 50 Gew.-% und 85 Gew.-% eines Polyethylens niedriger Dichte, das eine Dichte zwischen 0,915 g/cm³ und 0,935 g/cm³ aufweist, und zwischen 15 Gew.-% und < 50 Gew.-% eines Polypropylens mit einer Dichte zwischen 0,890 und 0,920 g/cm³ basierend auf dem Gesamtgewicht der Polymere der Schicht umfassen, wobei die Kernschicht weiter ein Ethylencopolymer umfasst, das 1-Octen umfasst und eine Dichte zwischen 0,910 g/cm³ und 0,925 g/cm³ aufweist.

2. Mehrschichtige Folie nach Anspruch 1, wobei die äußeren Schichten zwischen > 60 Gew.-% und 80 Gew.-%, bevorzugt zwischen > 65 Gew.-% und < 80 Gew.-%, weiter bevorzugt zwischen 65 Gew.-% und 75 Gew.-% des Polyethylens niedriger Dichte und zwischen 20 Gew.-% und < 40 Gew.-%, bevorzugt zwischen > 20 Gew.-% und < 35 Gew.%, weiter bevorzugt zwischen 25 Gew.-% und 35 Gew.-%, des Polypropylens basierend auf dem Gesamtgewicht der Polymere der Schicht umfassen.

3. Mehrschichtige Folie nach Anspruch 1 oder Anspruch 2, wobei die mehrschichtige Folie und/oder jede der drei Schichten gemäß der Erfindung nur Polyolefine als Polymere umfassen können und/oder die mehrschichtige Folie bevorzugt kein Polypropylen umfassen kann und/oder die mehrschichtige Folie bevorzugt kein Ethylen- und Vinylacetat-Copolymer und/oder kein Ethylen- und Vinylalkohol-Copolymer und/oder kein Copolymer aus Ethylen und einem Acrylat oder Methacrylat, insbesondere beispielsweise Acrylsäure oder Methacrylsäure, umfassen kann und/oder die mehrschichtige Folie bevorzugt eine mehrschichtige Folie für Schutzfolienanwendungen sein kann.

4. Mehrschichtige Folie nach einem der Ansprüche 1-3, wobei die Dichte des Polyethylens niedriger Dichte der äußeren Schichten zwischen > 0,915 und < 0,932 g/cm³, bevorzugt zwischen > 0,920 und < 0,930 g/cm³ liegt und/oder die Schmelzflussrate des Polyethylens niedriger Dichte der äußeren Schichten zwischen 0,2 und 3 g/10 min, bevorzugt zwischen 1 und 2,5 g/10 min liegen kann.

5. Mehrschichtige Folie nach einem der Ansprüche 1-4, wobei die Dichte des Polypropylens der äußeren Schichten zwischen > 0,895 und < 0,915 g/cm³, bevorzugt zwischen > 0,900 und < 0,910 g/cm³ liegt und/oder die Schmelzflussrate des Polypropylens der äußeren Schichten zwischen 0,2 und 15 g/10 min, bevorzugt zwischen 5 und 12 g/10 min liegen kann.

6. Mehrschichtige Folie nach einem der Ansprüche 1-5, wobei die Dichte des Ethylencopolymers der Kernschicht zwischen 0,910 und 0,922 g/cm³, bevorzugt zwischen > 0,910 und < 0,920 g/cm³ liegt und/oder die Schmelzflussrate des Ethylencopolymers der Kernschicht zwischen 0,2 und 6 g/10 min, bevorzugt zwischen 0,5 und 4 g/10 min liegen kann.

7. Mehrschichtige Folie nach einem der Ansprüche 1-6, wobei die Kernschicht zwischen 55 Gew.-% und 100 Gew.-%, bevorzugt zwischen > 60 Gew.-% und 100 Gew.-%, weiter bevorzugt zwischen > 70 Gew.-% und 100 Gew.-%, weiter bevorzugt zwischen > 80 Gew.-% und 100 Gew.-%, weiter bevorzugt zwischen > 90 Gew.-% und 100 Gew.-%, weiter bevorzugt zwischen > 95 Gew.-% und 100 Gew.-%, weiter bevorzugt zwischen > 99 Gew.% und 100 Gew.-% des Ethylencopolymers, das 1-Octen umfasst, basierend auf dem Gesamtgewicht der Polymere der Schicht umfasst.

8. Mehrschichtige Folie nach einem der Ansprüche 1 bis 7, wobei die Dicke jeder äußeren Schicht zwischen 15 % und 35 % der Gesamtfoliendicke, bevorzugt zwischen < 20 % und < 30 % der Gesamtfoliendicke, weiter bevorzugt 25 % der Gesamtfoliendicke darstellt und/oder die Dicke der Kernschicht zwischen 30 % und 70 % der Gesamtfoliendicke, bevorzugt zwischen > 40 % und < 60 % der Gesamtfoliendicke, weiter bevorzugt 50 % der Gesamtfoliendicke darstellt.

9. Mehrschichtige Folie nach einem der Ansprüche 1 bis 8, wobei das Polyethylen niedriger Dichte (LDPE) durch einen radikalischen Polymerisationsprozess und/oder ohne Katalysator und/oder unter Verwendung eines Autoklav-Hochdruckprozesses oder eines Rohrreaktorprozesses hergestellt wird.

10. Artikel, umfassend eine mehrschichtige Folie nach einem der Ansprüche 1-9.

11. Artikel nach Anspruch 10, wobei die mehrschichtige Folie so auf eine Oberfläche geklebt ist, dass die Folie von der Oberfläche entfernt werden kann, ohne dass Reste des Folienmaterials auf der Oberfläche zurückbleiben.

12. Artikel nach den Ansprüchen 10-11, wobei der Artikel eine Vorrichtung ist, die eine Scheibe umfasst, bevorzugt eine transparente Scheibe, beispielsweise eine Glasscheibe, die so positioniert ist, dass mindestens eine Oberfläche der Scheibe so angeordnet ist, dass sie der Außenseite der Vorrichtung, beispielsweise eines Anzeigebildschirms, zugewandt ist, wobei die mehrschichtige Folie so auf die Scheibe geklebt ist, dass sie die Oberfläche der Scheibe bedeckt, die der Außenseite der Vorrichtung zugewandt ist.

13. Artikel nach den Ansprüchen 10-12, wobei der Artikel eine Glasscheibe, ein elektronisches Display, ein Fernseher, ein Tablet-Computer, ein Laptop-Computer, ein Smartphone, ein Informationsbildschirm auf einem Armaturenbrett eines Autos oder ein Karosserieteil eines Autos ist.

14. Verwendung der mehrschichtigen Folie nach einem der Ansprüche 1-9 für Schutzfolienanwendungen, insbesondere für Schutzfolien in Hochtemperatur-Klebebeschichtungsprozessen, insbesondere beispielsweise ausgeführt unter Verwendung einer Temperatur > 75 °C, bevorzugt > 90 °C, weiter bevorzugt ≥ 100 °C.

15. Prozess zum Aufbringen einer mehrschichtigen Folie nach einem der Ansprüche 1-9 auf eine Oberfläche durch die folgenden Schritte:
a) Bereitstellen der Folie;
b) Bereitstellen eines Artikels, der eine Oberfläche umfasst, auf die die Folie aufgebracht werden soll;
c) Erhitzen der Folie auf eine Temperatur von > 75 °C, bevorzugt > 90 °C, weiter bevorzugt > 100 °C;
d) Inkontaktbringen einer der Oberflächen der erhitzten Folie mit der Oberfläche, auf die die Folie aufgebracht werden soll, bevorzugt durch Ausüben von Druck auf die Folie, um eine Oberfläche zu erhalten, mit der die Folie in Kontakt kommt; und
e) Abkühlen der Folie auf eine Temperatur von < 50 °C, um einen Artikel zu erhalten, der eine Oberfläche umfasst, auf die die Folie aufgebracht wird.

## Revendications

1. Film multicouche comprenant au moins trois couches, avec deux couches externes et une couche centrale, dans lequel les deux couches externes comprennent entre > 50 % en poids et 85 % en poids d'un polyéthylène basse densité présentant une densité comprise entre 0,915 g/cm³ et 0,935 g/cm³ et entre 15 % en poids et < 50 % en poids d'un polypropylène d'une densité comprise entre 0,890 et 0,920 g/cm³ sur la base du poids total des polymères de la couche, dans lequel en outre la couche centrale comprend un copolymère d'éthylène comprenant du 1-octène et présentant une densité comprise entre 0,910 g/cm³ et 0,925 g/cm³.

2. Film multicouche selon la revendication 1, dans lequel les couches externes comprennent entre > 60 % en poids et 80 % en poids, de préférence entre > 65 % en poids et < 80 % en poids, de préférence encore entre 65 % en poids et 75 % en poids, du polyéthylène basse densité et entre 20 % en poids et < 40 % en poids, de préférence entre > 20 % en poids et < 35 % en poids, de préférence encore entre 25 % en poids et 35 % en poids, du polypropylène sur la base du poids total des polymères de la couche.

3. Film multicouche selon la revendication 1 ou la revendication 2, dans lequel le film multicouche et/ou chacune des trois couches selon l'invention peut comprendre uniquement des polyoléfines en tant que polymères et/ou le film multicouche peut de préférence ne comprendre aucun polypropylène et/ou le film multicouche peut de préférence ne comprendre aucun copolymère d'éthylène et d'acétate de vinyle et/ou aucun copolymère d'éthylène et d'alcool vinylique et/ou aucun copolymère d'éthylène et un acrylate ou un méthacrylate, notamment par exemple l'acide acrylique ou l'acide méthacrylique, et/ou le film multicouche peut de préférence être un film multicouche pour applications de film de protection.

4. Film multicouche selon l'une quelconque des revendications 1-3, dans lequel la densité du polyéthylène basse densité des couches externes est comprise entre > 0,915 et < 0,932 g/cm³, de préférence entre > 0,920 et < 0,930 g/cm³ et/ou l'indice de fluidité à chaud du polyéthylène basse densité des couches externes peut être compris entre 0,2 et 3 g/10 min, de préférence entre 1 et 2,5 g/10 min.

5. Film multicouche selon l'une quelconque des revendications 1-4, dans lequel la densité du polypropylène des couches externes est comprise entre > 0,895 et < 0,915 g/cm³, de préférence entre > 0,900 et < 0,910 g/cm³ et/ou l'indice de fluidité à chaud du polypropylène des couches externes peut être compris entre 0,2 et 15 g/10 min, de préférence entre 5 et 12 g/10 min.

6. Film multicouche selon l'une quelconque des revendications 1-5, dans lequel la densité du copolymère d'éthylène de la couche centrale est comprise entre 0,910 et 0,922 g/cm³, de préférence entre > 0,910 et < 0,920 g/cm³ et/ou l'indice de fluidité à chaud du copolymère d'éthylène de la couche centrale peut être compris entre 0,2 et 6 g/10 min, de préférence entre 0,5 et 4 g/10 min.

7. Film multicouche selon l'une quelconque des revendications 1-6, dans lequel la couche centrale comprend entre 55 % en poids et 100 % en poids, de préférence entre > 60 % en poids et 100 % en poids, de préférence encore entre > 70 % en poids et 100 % en poids, de préférence encore entre > 80 % en poids et 100 % en poids, de préférence encore entre > 90 % en poids et 100 % en poids, de préférence encore entre > 95 % en poids et 100 % en poids, de préférence encore entre > 99 % en poids et 100 % en poids du copolymère d'éthylène comprenant du 1-octène sur la base du poids total des polymères de la couche.

8. Film multicouche selon l'une quelconque des revendications 1 à 7, dont l'épaisseur de chaque couche externe représente entre 15 % et 35 % de l'épaisseur totale du film, de préférence entre < 20 % et < 30 % de l'épaisseur totale du film, de préférence encore 25 % de l'épaisseur totale du film et/ou l'épaisseur de la couche centrale représente entre 30 % et 70 % de l'épaisseur totale du film, de préférence entre > 40 % et < 60 % de l'épaisseur totale du film, de préférence encore 50 % de l'épaisseur totale du film.

9. Film multicouche selon l'une quelconque des revendications 1 à 8, dans lequel le polyéthylène basse densité (LDPE) est produit par un procédé de polymérisation radicalaire et/ou sans aucun catalyseur et/ou en utilisant un processus autoclave à haute pression ou un procédé en réacteur tubulaire.

10. Article comprenant un film multicouche selon l'une quelconque des revendications 1-9.

11. Article selon la revendication 10, dans lequel le film multicouche adhère à une surface de telle manière que le film puisse être retiré de la surface sans laisser de restes du matériau de film sur la surface.

12. Article selon les revendications 10-11, dans lequel l'article est un dispositif comprenant une vitre, de préférence une vitre transparente, par exemple une vitre en verre, qui est positionnée de telle sorte qu'au moins une surface de la vitre soit agencée pour faire face au côté extérieur du dispositif, par exemple un écran d'affichage, dans lequel le film multicouche est collé à la vitre de manière à recouvrir la surface de la vitre qui fait face au côté extérieur du dispositif.

13. Article selon les revendications 10-12, dans lequel l'article est une feuille de verre, un affichage électronique, un téléviseur, une tablette informatique, un ordinateur portable, un smartphone, un écran d'information de tableau de bord automobile ou un panneau de carrosserie automobile.

14. Utilisation du film multicouche selon l'une quelconque des revendications 1-9 pour des applications de film de protection, en particulier pour des films de protection dans des processus de revêtement adhésif à haute température, notamment par exemple réalisés à une température > 75 °C, de préférence > 90 °C, de préférence encore ≥ 100 °C.

15. Processus d'application d'un film multicouche selon l'une quelconque des revendications 1-9 sur une surface par les étapes consistant à :
a) fournir le film ;
b) fournir un article comprenant une surface sur laquelle le film doit être appliqué ;
c) amener le film à une température de > 75 °C, de préférence > 90 °C, de préférence encore > 100 °C ;
d) mettre en contact l'une des surfaces du film chauffé avec la surface sur laquelle le film doit être appliqué, de préférence en appliquant une pression sur le film pour obtenir une surface avec laquelle le film est en contact ; et
e) refroidir le film à une température de < 50 °C, pour obtenir un article comprenant une surface sur laquelle le film est appliqué.
